# FASCICULE DE BREVET EUROPEEN

(11) **EP 3 137 741 B1**
(45) Date de publication et mention de la délivrance du brevet: **09.09.2020**
(21) Numéro de dépôt: 15725807.0
(22) Date de dépôt: 27.04.2015
(51) Int. Cl.: F01D 25/16, F02C 7/32, F02C 7/36, F02K 3/06, F02C 7/06

(54) **TURBOMACHINE D'AÉRONEF A PRÉLÈVEMENT DE PUISSANCE MÉCANIQUE AMÉLIORÉ**
FLUGZEUGTRIEBWERK MIT VERBESSERTEM DER ZIEHEN MECHANISCHEN LEISTUNG
AIRCRAFT TURBINE ENGINE WITH IMPROVED DRAWING OF MECHANICAL POWER

(30) Priorité: 29.04.2014 FR 1453890
(43) Date de publication de la demande: 08.03.2017
(73) Titulaire: SAFRAN AIRCRAFT ENGINES, 75015 Paris (FR)
(72) Inventeur: NOWAKOWSKI, Nathalie, 77550 Moissy-Cramayel Cedex (FR); VINCENT, Thomas, Alain, Christian, 77550 Moissy-Cramayel Cedex (FR)
(74) Mandataire: Brevalex
(86) Numéro de dépôt international: PCT/FR2015/051133
(87) Numéro de publication internationale: WO 2015/166179

(56) Documents cités:
- EP-A1- 1 911 938
- EP-A2- 1 918 564
- FR-A1- 2 908 461
- US-A- 4 118 997
- US-B1- 8 702 373

## Description

### DOMAINE TECHNIQUE

La présente invention se rapporte au domaine des turbomachines d'aéronef comprenant un boîtier de prélèvement de puissance mécanique, également dénommé boîtier « IGB » (de l'anglais « Inner Gear Box »).

L'invention s'applique tout particulièrement aux turboréacteurs à double flux, dont la soufflante est entraînée par un réducteur.

### ETAT DE LA TECHNIQUE ANTERIEURE

Sur les turbomachines existantes comprenant un réducteur pour l'entraînement de la soufflante entourée d'un carter de soufflante, il est connu de prélever de la puissance mécanique sur l'arbre moteur haute pression, pour entraîner un boîtier d'engrenages. Ce dernier, également dénommé « AGB » (de l'anglais « Accessory Gear Box »), est par exemple logé dans un compartiment inter-veine de la turbomachine, c'est-à-dire dans un compartiment situé radialement entre le canal primaire et le canal secondaire de la turbomachine.

Un tel boîtier d'engrenages est classiquement formé à l'aide d'arbres portant des pignons droits pour s'entraîner les uns les autres en rotation, et pour entraîner les équipements auxquels ils sont associés. A titre d'exemple indicatif, les équipements peuvent être du type pompe à carburant, pompe hydraulique, pompe de lubrification, alternateur, démarreur, ou encore générateur électrique de puissance.

Pour le prélèvement de la puissance mécanique sur l'arbre moteur haute pression, il est prévu un boîtier de prélèvement, dit « IGB » ou encore « boîtier d'entraînement interne ». Ce boîtier comporte une roue dentée engrenant avec une autre roue dentée, solidaire en rotation de l'arbre moteur haute pression. Le boîtier IGB entraîne à son tour en rotation un arbre de prélèvement de puissance mécanique, destiné quant à lui à entraîner le boîtier d'engrenages, habituellement via un boîtier de renvoi d'angle également dit boîtier « TGB » (de l'anglais « Transfer Gear Box »).

Néanmoins, en particulier en cas d'avarie, il se peut que des besoins en prélèvement de puissance mécanique subsistent, sans pouvoir être produits par le corps haute pression faiblement entraîné ou ne tournant plus. Il s'agit par exemple d'un besoin en lubrification du réducteur, qui, lorsque la soufflante continue à tourner par phénomène d'autorotation (de l'anglais « windmilling »), doit toujours être lubrifié.

Il existe donc un besoin d'optimisation de la conception de telles turbomachines pour mieux répondre aux besoins en prélèvement de puissance mécanique, en particulier en cas d'avarie.

### EXPOSÉ DE L'INVENTION

L'invention a donc pour but de proposer une solution remédiant au moins partiellement aux problèmes mentionnés ci-dessus, rencontrés dans les solutions de l'art antérieur.

Pour ce faire, l'invention a pour objet une partie avant de turbomachine d'aéronef comprenant les caractéristiques de la revendication 1.

Avec cet agencement spécifique à l'invention, en particulier en cas d'avarie sur la turbomachine, la fiabilité du prélèvement de puissance mécanique par le boîtier dédié est accrue, puisque l'ensemble du corps basse pression est susceptible de continuer à tourner par effet d'autorotation de la soufflante. Cette fiabilité est d'autant plus augmentée que le prélèvement s'effectue sur l'élément moteur de cette autorotation, c'est-à-dire la soufflante. Ceci est particulièrement avantageux pour répondre à un besoin vital en lubrification du réducteur, même après une avarie survenue sur la turbomachine.

Par ailleurs, il a été relevé qu'un tel prélèvement de puissance mécanique conduisait à des performances globales plus élevées que celles obtenues dans les solutions classiques à prélèvement de puissance sur l'arbre haute pression. A cet égard, sur de telles turbomachines à réducteur, des gains en carburant allant jusqu'à 4% ont été enregistrés. Cela s'explique en partie par un plus faible prélèvement de puissance sur le corps haute pression, qui permet d'ailleurs d'en réduire les dimensions.

De plus, il est noté que la présence d'un réducteur dans le corps basse pression, pour l'entraînement de la soufflante, est généralement retenue pour l'obtention d'un fort taux de dilution, typiquement supérieur à dix. Pour rappel, le taux de dilution est le rapport de la masse d'air transitant par la soufflante sur la masse d'air utilisée dans la chambre de combustion. La présence d'un réducteur autorise l'augmentation du diamètre de soufflante, et favorise donc l'obtention d'un taux de dilution plus élevé, générant un meilleur rendement. L'augmentation de ce taux de dilution passe également par la mise en œuvre d'un corps haute pression avec des dimensions de plus en plus faibles en comparaison des dimensions de la soufflante, ce qui rend délicat tout prélèvement de puissance mécanique sur l'arbre haute pression. En prélevant de la puissance sur le corps basse pression, et en particulier sur la soufflante, l'invention apporte par conséquent une réponse satisfaisante aux difficultés rencontrées dans les solutions de l'art antérieur, avec un prélèvement sur le corps haute pression.

Dans le cas particulier du problème de lubrification du réducteur, il est noté que le prélèvement de puissance mécanique sur la soufflante permet d'implanter des moyens de lubrification de faibles dimensions, propices à un encombrement global réduit. En effet, ces moyens de lubrification n'ont plus besoin d'être surdimensionnés comme dans les solutions de l'art antérieur dans lesquelles le prélèvement s'effectuait sur le corps haute pression, susceptible de ne fournir qu'une puissance limitée en cas d'avarie. Bien entendu, ce constat peut être effectué pour d'autres types d'équipements de la turbomachine, et pas seulement pour les moyens de lubrification du réducteur entraînant la soufflante.

L'invention présente par ailleurs au moins l'une des caractéristiques optionnelles suivantes, prises isolément ou en combinaison.

Ledit moyeu de soufflante est supporté par deux paliers de soufflante, et la première roue dentée est agencée axialement entre les deux paliers de roulement.

Le réducteur comporte un train d'engrenages. Ce train d'engrenages est préférentiellement soit épicycloïdal, soit planétaire. Il est noté que conventionnellement, le train est dit épicycloïdal lorsque la couronne est fixe en rotation, tandis qu'il est dit planétaire lorsque le porte-satellites est fixe en rotation.

De préférence, le train épicycloïdal comprend ;
- un planétaire entraîné en rotation par un arbre basse pression du corps basse pression, et de préférence solidaire en rotation de cet arbre basse pression ;
- une couronne extérieure solidaire d'un stator de la turbomachine ;
- des satellites engrenant avec la couronne extérieure et le planétaire ; et
- un porte-satellites entraînant en rotation un moyeu de la soufflante, et de préférence solidaire en rotation de ce moyeu.

Le réducteur est du type à paliers lisses. Pour rappel, les paliers lisses fonctionnent comme des roulements, mais l'avantage réside dans le fait que les corps roulants sont avantageusement remplacés par un film d'huile. Il en découle en gain d'encombrement notable. Cependant, les paliers lisses ne supportent pas la dégradation du film d'huile qui doit toujours être présent et posséder une certaine vitesse (pour les paliers lisses hydrodynamiques), ou une certaine pression (pour paliers lisses hydrostatiques). Lors d'une éventuelle phase d'autorotation de la soufflante, la conception de l'invention permet la lubrification vitale de ces paliers grâce au prélèvement effectué sur la première roue dentée, solidaire en rotation de la soufflante. Ce principe est également valable au sol, lorsque la soufflante commence à tourner et que le réducteur doit être lubrifié.

Eventuellement, la partie avant de turbomachine comporte un autre boîtier de prélèvement de puissance mécanique entraînant le boîtier d'engrenages, cet autre boîtier prélevant de la puissance sur un arbre haute pression du corps haute pression de la turbomachine. Les deux boîtiers de prélèvement peuvent alors fonctionner simultanément et/ou alternativement. Selon un autre mode de réalisation préféré, le boîtier d'engrenages est uniquement alimenté en puissance par le premier boîtier de prélèvement de puissance mécanique, coopérant avec le moyeu de la soufflante.

Ladite pluralité d'équipements comprend, entraînés par le boîtier d'engrenages, un ou plusieurs équipements parmi une pompe à carburant, une pompe hydraulique, une pompe de lubrification, un alternateur, un démarreur, ou encore un générateur électrique de puissance. Comme évoqué ci-dessus, ce/ces équipements, entraînés par le boîtier d'engrenages de la turbomachine, sont préférentiellement logés dans le compartiment inter-veine, tout comme ledit boîtier constituant le boîtier principal d'engrenages de la turbomachine.

L'invention a également pour objet une turbomachine comprenant une telle partie avant. Enfin, cette turbomachine est préférentiellement un turboréacteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté, d'un turboréacteur selon l'invention ;
- la figure 2 représente une vue agrandie, plus détaillée, d'une partie avant du turboréacteur montré sur la figure précédente, selon un mode de réalisation préféré de l'invention ;
- les figures 3 à 5 sont des vues détaillées d'une partie avant du turboréacteur montré sur les figures précédentes, montrant un assemblage spécifique à l'invention ; et
- les figures 6a à 6f représentent des vues schématisant différentes étapes d'un procédé de montage de l'assemblage montré sur les figures 3 à 5.

### EXPOSÉ DÉTAILLÉ DE MODES DE RÉALISATION PRÉFÉRÉS

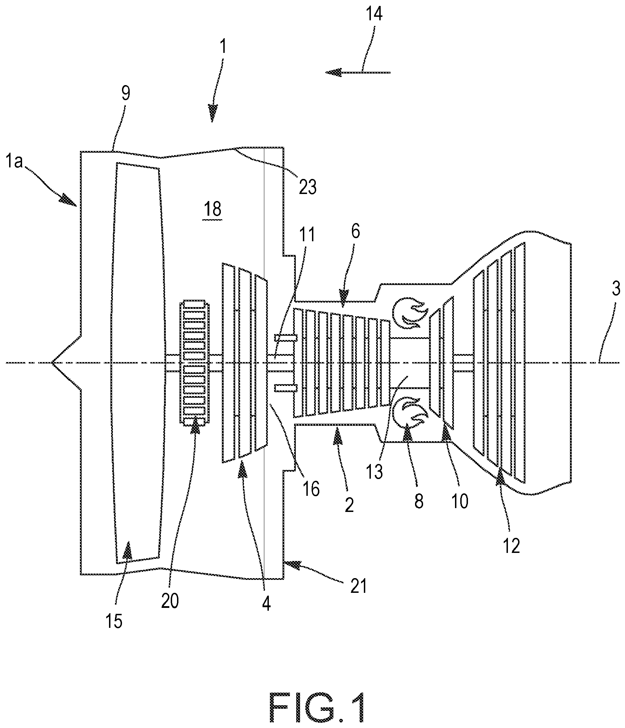

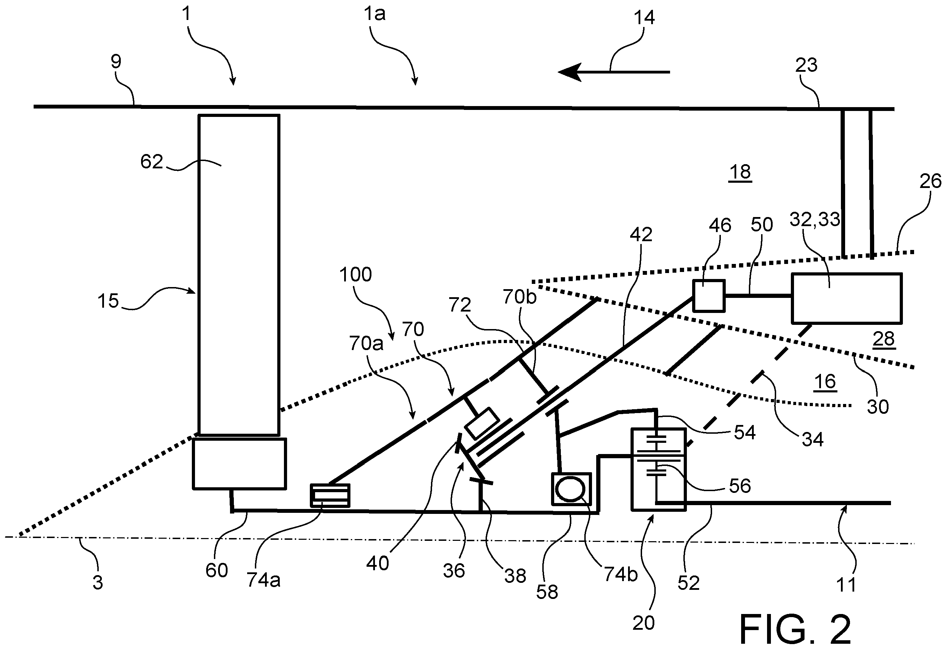

En référence tout d'abord aux figures 1 et 2, il est représenté un turboréacteur 1 à double flux et à double corps, présentant un taux de dilution élevé. Le turboréacteur 1, qui présente une partie avant référencée la sur la figure 2, comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 de celle-ci.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11.

Le turboréacteur 1 comporte par ailleurs, à l'avant du générateur de gaz 2 et du compresseur basse pression 4, une soufflante 15. Cette soufflante est rotative selon l'axe 3, et entourée d'un carter de soufflante 9. Elle n'est pas entraînée directement par l'arbre basse pression 11, mais seulement entraînée indirectement par cet arbre. En effet, un réducteur 20 est agencé entre le corps basse pression et la soufflante 15, en étant disposé axialement entre cette dernière et le compresseur basse pression 4. La présence du réducteur 20 pour entraîner la soufflante 15 permet de prévoir un plus grand diamètre de soufflante, et favorise donc l'obtention d'un plus fort taux de dilution, assurant un gain de consommation en carburant.

En outre, le turboréacteur 1 définit un premier canal 16 destiné à être traversé par un flux primaire, ainsi qu'un canal secondaire 18 destiné à être traversé par un flux secondaire situé radialement vers l'extérieur par rapport au flux primaire. Comme cela est connu de l'homme du métier, ce canal secondaire 18 est délimité radialement vers l'extérieur par une virole extérieure 23 d'un carter intermédiaire 21. Celui-ci comprend également un moyeu raccordé à la virole extérieure 23 par l'intermédiaire de bras radiaux. La virole extérieure 23, préférentiellement métallique, prolonge vers l'arrière le carter de soufflante 9.

De plus, le canal secondaire 18 est délimité radialement vers l'intérieur par une surface de délimitation interne 26 servant également de délimitation externe à un compartiment inter-veine 28, visible sur la figure 2. Ce compartiment inter-veine 28 est également délimité vers l'avant par le moyeu du carter intermédiaire, et radialement vers l'intérieur par une virole 30 renfermant le compresseur basse pression 4 mentionné ci-dessus.

Dans le turboréacteur 1, il est prévu un boîtier d'engrenages 32 ou un équipement de turboréacteur nécessitant une puissance mécanique, ce boîtier étant par la suite appelé boîtier AGB 32. Il est placé dans le compartiment inter-veine 28, par exemple fixé sur une face aval du moyeu du carter intermédiaire. Néanmoins, cette implantation peut être différente, c'est la raison pour laquelle sur la figure 2, ce boîtier AGB 32 a simplement été schématisé au sein du compartiment inter-veine 28, sans rattachement spécifique.

De manière classique et comme cela a été indiqué précédemment, le boîtier AGB 32 est formé à l'aide d'arbres portant des pignons droits pour s'entraîner les uns les autres en rotation, et pour entraîner les équipements auxquels ils sont associés, logés dans le compartiment inter-veine 28. Ici, seul un équipement a été représenté, schématiquement. Il s'agit d'un équipement 33 permettant d'alimenter le réducteur 20 en lubrifiant, via une conduite de lubrification 34. Néanmoins, d'autres équipements sont prévus, comme par exemple du type pompe à carburant, pompe hydraulique, alternateur, démarreur, ou encore générateur électrique de puissance.

Pour le prélèvement de la puissance mécanique destinée à alimenter le boîtier AGB 32, il est prévu un boîtier de prélèvement 36, ci-après dénommé boîtier IGB. Une première roue dentée 38 centrée sur l'axe 3 et entraînée par la soufflante 15 engrène avec une seconde roue dentée 40 du boîtier IGB 36. La première roue 38 correspond alors à une roue de prélèvement de puissance, dite roue menante.

La seconde roue dentée 40, dite roue menée, loge un arbre de prélèvement de puissance mécanique 42 qu'elle entraîne en rotation selon l'axe de cet arbre, ce dernier étant de préférence incliné selon la direction de l'axe 3. L'arbre de prélèvement 42 coopère à son extrémité opposée avec un boîtier de renvoi d'angle 46, ci-après dénommé boîtier TGB et placé dans le compartiment inter-veine 28. Enfin, pour compléter la chaîne cinématique entre le boîtier TGB 46 et le boîtier AGB 32, il est prévu un arbre rotatif de transmission 50.

Le réducteur 20 comprend un train épicycloïdal. Il est noté que conventionnellement, le train est dit épicycloïdal lorsque la couronne est fixe en rotation, tandis qu'il est dit planétaire lorsque le porte-satellites est fixe en rotation. Ici, il comporte tout d'abord un planétaire 52 centré sur l'axe 3 et solidaire en rotation de l'arbre basse pression 11, en étant agencé dans le prolongement avant de cet arbre 11. Les deux éléments 11, 52 peuvent être réalisés d'une seule pièce, ou bien préférentiellement rapportés fixement l'un sur l'autre. Le train épicycloïdal comporte par ailleurs une couronne extérieure 54, solidaire d'un stator du turboréacteur. Il est également prévu des satellites 56, engrenant avec la couronne extérieure 54 et le planétaire 52. Enfin, le train épicycloïdal comporte un arbre porte-satellites 58 solidaire en rotation avec un moyeu de soufflante 60, également dénommé rotor de soufflante, ce dernier portant les aubes de soufflante 62 par l'intermédiaire d'un disque de soufflante. Ici aussi, les deux éléments 58, 60 peuvent être réalisés d'une seule pièce, ou bien préférentiellement rapportés fixement l'un sur l'autre. Dans une autre configuration possible non représentée, dite à train planétaire, le porte-satellites 58 est solidaire du stator du turboréacteur, et la couronne extérieure 54 est solidaire en rotation avec le moyeu de soufflante 60.

La première roue dentée précitée 38, entraînant le boîtier IGB 36, est solidaire en rotation du moyeu de soufflante 60, en étant fixée sur le porte-satellites 58 ou sur ce moyeu de soufflante 60, comme cela a été schématisé sur la figure 2. Aussi, puisque le réducteur 20 est entraîné par l'arbre basse pression 11, ce réducteur ainsi que la soufflante 15 peuvent être considérés comme faisant partie du corps basse pression du turboréacteur. L'avantage réside ici dans le fait que lors d'une phase d'autorotation de la soufflante, dans laquelle toute ou partie de la puissance générant la rotation du corps basse pression provient d'une autre source que du corps haute pression, par exemple de la force aérodynamique s'appliquant sur les aubes de la soufflante, il est toujours possible de prélever une puissance mécanique minimale sur celle-ci. Ceci est particulièrement avantageux pour répondre à un besoin vital en lubrification du réducteur 20 durant l'autorotation de la soufflante. D'autant que pour diminuer la masse et l'encombrement du réducteur 20, ce dernier est conçu avec des paliers lisses (non représentés sur la figure 2) supportant ses éléments rotatifs. Aussi, dans cette conception avantageuse, les corps roulants classiques des paliers de roulement sont remplacés par un film d'huile, qui possède soit une certaine vitesse pour les paliers du type hydrodynamique, soit une certaine pression pour les paliers du type hydrostatique. Par conséquent, lors d'une éventuelle autorotation de la soufflante, la conception de l'invention permet la lubrification vitale de ces paliers lisses, grâce au prélèvement effectué sur la première roue dentée 38 qui reste entraînée par la soufflante 15 en rotation. En effet, la rotation de la soufflante 15 entraîne en chaîne la rotation de la première roue dentée 38, la rotation de la seconde roue dentée 40, la rotation des arbres 42, 50, l'entrainement du boîtier AGB 32, et enfin l'actionnement de l'équipement 33 provoquant la lubrification du réducteur 20, via la conduite 34. Cette lubrification évite la dégradation des films d'huile des paliers lisses de ce réducteur, et assure ainsi le bon fonctionnement de ce dernier tout en prolongeant sa durée de vie.

Il est noté qu'en cas d'autorotation de la soufflante, la lubrification du réducteur 20 est effectivement assurée de la manière exposée ci-dessus, mais d'autres moyens conventionnels pourraient être prévus en sus pour assurer la lubrification de ce réducteur en dehors d'une éventuelle phase d'autorotation.

En référence à présent aux figures 2 à 5, il est montré un assemblage 100 faisant partie intégrante du turboréacteur 1. L'assemblage 100 comporte tout d'abord un support de palier de roulement 70, raccordé au carter de délimitation intérieur du premier canal 16 par le biais d'un flasque structural 72, montré uniquement schématiquement sur la figure 2. Le support de palier 70 fait donc partie du stator du turboréacteur 1. Il est situé à l'avant du réducteur 20, et supporte à ses deux extrémités axiales opposées respectivement deux paliers de roulement 74a, 74b. Les deux paliers guident un ensemble rotatif destiné à être entraîné par le générateur de gaz 2, cet ensemble comprenant le porte-satellites 58 du réducteur, le moyeu 60 de la soufflante, et la première roue dentée 38. La première roue dentée 38 est agencée axialement entre les deux paliers de roulement 74a, 74b.

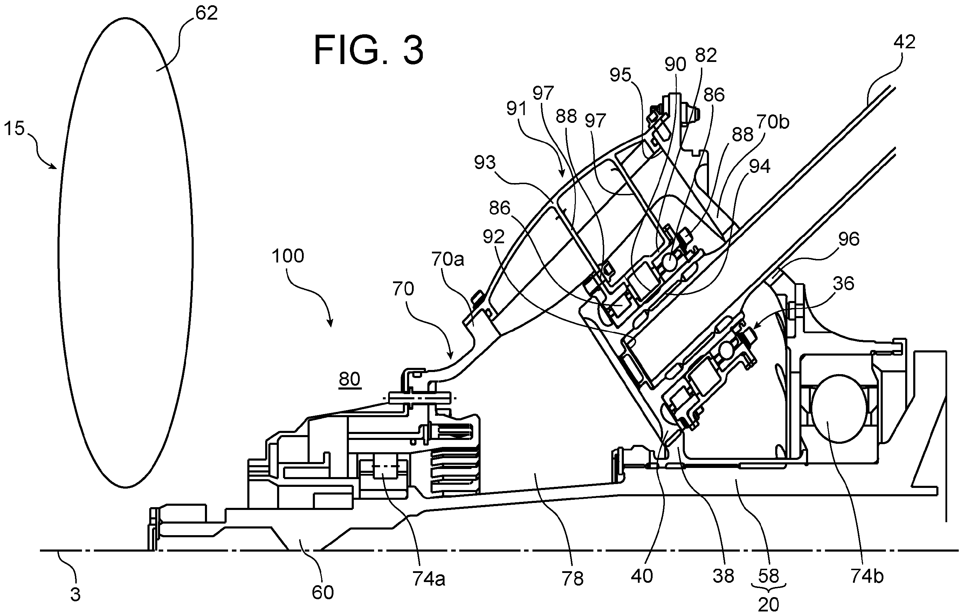

Le support de palier 70 est centré sur l'axe 3. Il délimite un espace radialement intérieur 78 dans lequel sont placés les paliers 74a, 74b, et forme en partie une enceinte de lubrification. Le support est réalisé à l'aide d'une pièce d'un seul tenant, ou de plusieurs pièces fixées les unes aux autres comme cela a été représenté sur les figures 3 à 5. Il s'agit en effet de deux pièces rapportées l'une sur l'autre par des boulons axiaux, la pièce la plus arrière, de plus petite dimension, portant le palier de roulement 74b supportant le porte-satellites 58.

Ensemble, les deux pièces du support de palier 70 forment une première et une seconde portions 70a, 70b, inclinées l'une par rapport à l'autre. Ces deux portions forment un V en demi-section axiale, le V étant ouvert radialement vers l'intérieur et définissant un angle d'inclinaison compris entre 30 et 120° entre les deux portions, et de préférence d'environ 90°.

Le boîtier IGB 36 précité est également placé dans l'espace radialement intérieur 78, opposé à un espace radialement extérieur 80. A cet égard, il est indiqué que du côté de la portion avant 70a du support de palier 70, cet espace extérieur 80 est situé en dehors de l'enceinte de lubrification, tandis que du côté de la portion arrière 70b du support de palier 70, cet espace extérieur 80 fait partie de l'enceinte de lubrification intégrant également l'espace intérieur 78.

Comme indiqué précédemment, le boîtier IGB 36 comporte la seconde roue dentée 40, entraînée en rotation par la première roue dentée 38 solidaire du porte-satellites 58. Les axes de ces roues étant inclinés l'un par rapport à l'autre, des engrenages coniques sont mis en œuvre. La seconde roue 40 est portée par un corps fixe 82, dans lequel est logée cette même roue 40.

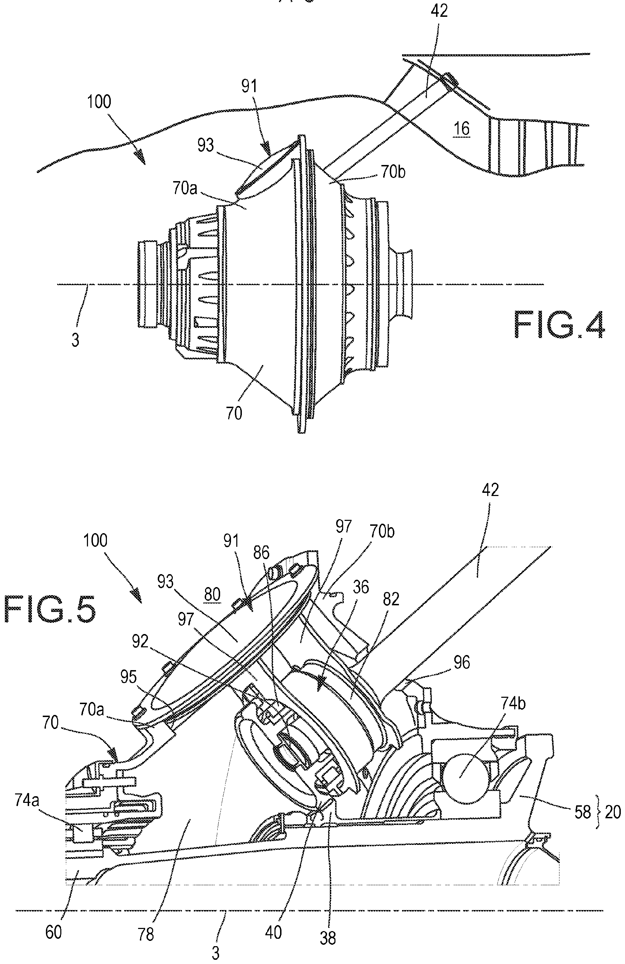

Le boîtier IGB 36 va à présent être décrit plus spécifiquement en référence aux figures 3 et 5. Son corps 82 se présente sous la forme d'une chemise recevant la seconde roue dentée 40, avec des roulements 86 interposés entre ces éléments. Les roulements 86 et la roue 40 sont maintenus au corps 82 par des éléments vissés 88, agencés aux extrémités axiales du boîtier IGB 36. Plus précisément, ces éléments vissés permettent de solidariser les bagues extérieures des roulements 88 au corps 82. De plus, une entretoise 90 est prévue entre les bagues intérieures des deux roulements 88.

La seconde roue dentée 40 définit intérieurement un logement dans lequel se loge l'extrémité avant de l'arbre 42. Le montage est glissant, de préférence pour que cet arbre soit uniquement en appui axial dans le fond du boîtier, c'est-à-dire en appui axial contre un fond 92 défini par la roue 40. Aussi, cela facilite les opérations d'introduction et d'extraction de l'arbre 42, lors des opérations de maintenance. Pour l'entrainement en rotation de l'arbre 42, ce dernier présente une surface extérieure structurée coopérant avec la surface intérieure de la roue 40. Une liaison 94 du type cannelée peut ainsi être mise en œuvre pour réaliser cet entrainement en rotation.

Depuis son extrémité avant logée dans le boîtier IGB 36, l'arbre de prélèvement 42 s'étend vers l'arrière, et radialement vers l'extérieur jusqu'au boîtier TGB 46. Pour ce faire, il traverse une première ouverture 96 pratiquée sur le support de palier 70, et plus précisément pratiquée à travers la seconde portion 70b de ce support. Il traverse ensuite le premier canal 16 avant de se connecter au boîtier TGB 46.

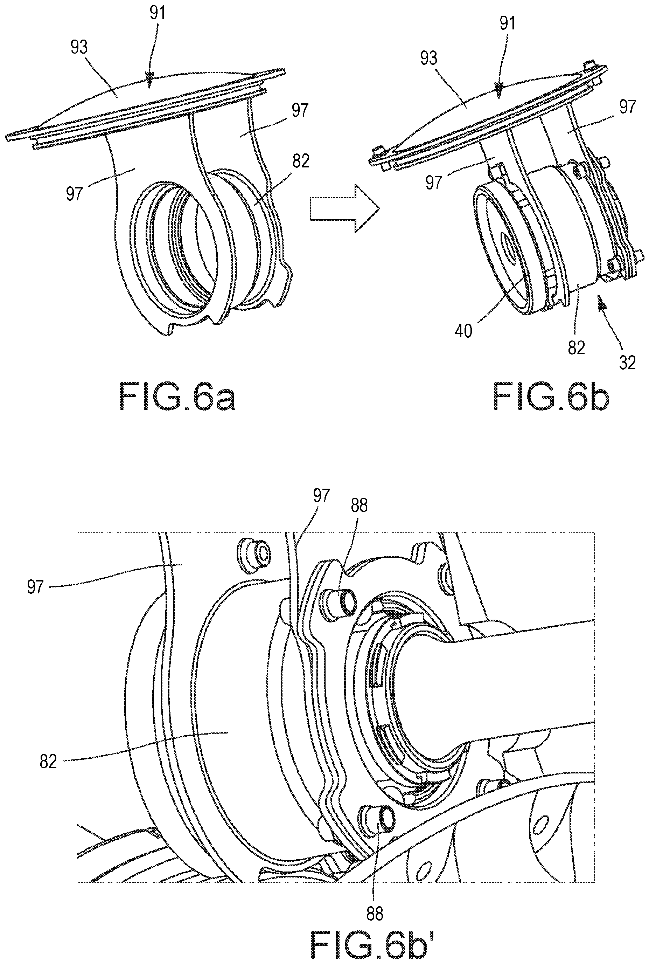

Enfin, l'assemblage 100 comporte des moyens 91 de montage du corps 82 du boîtier IGB 36, sur la première portion 70a du support de palier 70. Ces moyens de montage 91 comprennent tout d'abord des moyens formant un couvercle 93, obturant une seconde ouverture 95 pratiquée à travers la première portion 70a. Une liaison étanche est prévue entre le support 70 et le couvercle 93 vissé sur ce support, pour fermer l'enceinte de lubrification 78 de manière satisfaisante et éviter une fuite d'huile et une dépression de l'enceinte de lubrification. Les moyens de montage 91 comportent également des moyens de liaison 97 entre le couvercle 93 et le corps 82 du boîtier IGB 36. Ces moyens de liaison 97 sont formés ici par deux plaques, par exemple réalisées d'une seule pièce avec le couvercle et/ou avec le corps 82. Ces deux plaques sont ainsi reliées à la surface intérieure du couvercle 93, et traversent la seconde ouverture 95 du support. Cette seconde ouverture 95 est d'ailleurs configurée pour permettre l'introduction du boîtier de prélèvement dans l'espace radialement intérieur, comme cela va à présent être décrit en référence aux figures 6a à 6f.

Sur ces figures, il est en effet montré différentes étapes successives d'un procédé de montage de l'assemblage 100.

Tout d'abord en référence aux figures 6a à 6b', le boîtier IGB 36 est assemblé en dehors du turboréacteur, en étant monté sur ses moyens de montage 91. Pour ce faire, la seconde roue dentée 40 est mise en place dans le corps 82, avec ses roulements associés. Les éléments vissés 88 assurent l'assemblage des divers éléments du boîtier IGB 36 et permettent d'obtenir un ensemble aisément manipulable par un opérateur, que ce soit lors de la fabrication du turboréacteur, ou lors d'une opération de maintenance.

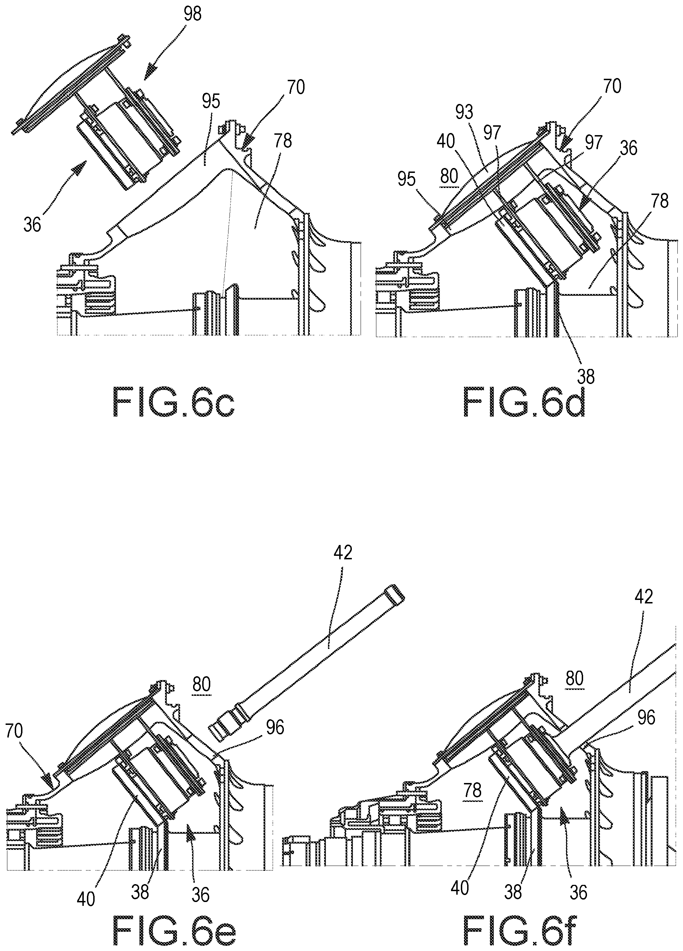

Cet ensemble, référencé 98 sur la figure 6c, est ensuite déplacé de manière à ce que le boîtier IGB 36 soit introduit dans l'espace radialement intérieur 78 en passant à travers la seconde ouverture 95 du support 70, dimensionnée en conséquence. Cette introduction est poursuivie jusqu'à ce que le couvercle 93 obture cette ouverture, comme cela a été représenté sur la figure 6d. Il est ensuite procédé à la fixation étanche du couvercle 93 sur le support 70, depuis l'espace radialement extérieur 80, par vissage. Dans cette position, les plaques de liaison 97 traversent l'ouverture 95 et amènent la seconde roue dentée 40 du boîtier IGB 36 à engrener avec la première roue dentée 38.

Ensuite, l'arbre de prélèvement 42 est introduit dans le boîtier IGB 36, également depuis l'espace radialement extérieur 80, comme cela a été schématisé sur la figure 6e. Pour ce faire, l'arbre 42 traverse la première ouverture 96 pratiquée à travers la seconde portion du support 70. L'arbre 42 est ainsi simplement glissé dans la seconde roue 40, jusqu'au contact avec le fond pour atteindre la position représentée sur la figure 6f.

Aussi, il doit être compris que la conception retenue permet un montage et un démontage aisés du boîtier IGB 36, particulièrement intéressants dans le cadre des opérations de maintenance. En effet, pour le démontage, une fois l'arbre 42 extrait du boîtier par déplacement à travers la première ouverture 96 du support de palier 70, ce boîtier peut être extrait de l'espace radialement intérieur 78 par la seconde ouverture 95 dimensionnée en conséquence. Le support de palier 70 ne nécessite donc pas d'être démonté pour autoriser l'accès au boîtier IGB 36, ce qui facilite le démontage de ce dernier. D'ailleurs, il est noté que lorsque l'ouverture 95 est agencée sur la partie supérieure du moteur, cela permet d'ouvrir l'enceinte de lubrification sans provoquer de fuite d'huile, évitant ainsi une vidange de l'enceinte et facilitant l'opération pour les mécaniciens.

Bien entendu, lorsque le boîtier doit être remonté dans l'espace radialement intérieur, des opérations inverses sont mises en œuvre.

Bien entendu, diverses modifications peuvent être apportées par l'homme du métier à l'invention qui vient d'être décrite, uniquement à titre d'exemples non limitatifs, sans sortir du cadre de protection défini par les revendications qui suivent.

## Revendications

1. Partie avant (1a) de turbomachine à double flux (1) d'aéronef comprenant une soufflante (15) entourée d'un carter de soufflante (9) ainsi qu'un réducteur (20) entraînant ladite soufflante (15), la partie avant de turbomachine comportant en outre un boîtier d'engrenages (32) ainsi qu'un boîtier de prélèvement de puissance mécanique (36) entraînant le boîtier d'engrenages, la partie avant de turbomachine comprenant une première roue dentée (38) ainsi qu'une seconde roue dentée (40) faisant partie du boîtier de prélèvement de puissance mécanique (36) et entraînée par ladite première roue dentée (38),
où ladite première roue dentée (38) est solidaire en rotation d'un moyeu (60) de la soufflante (15),
la partie avant comporte une pluralité d'équipements parmi lesquels un équipement (33) permettant d'alimenter le réducteur (20) en lubrifiant, les équipements étant entraînés par le boîtier d'engrenages (32),
et ladite pluralité d'équipements, ainsi que le boîtier d'engrenages (32), sont agencés dans un compartiment inter-veine (28) de la turbomachine.

2. Partie avant de turbomachine selon l'une quelconque des revendications précédentes, **caractérisée en ce que** le réducteur (20) est du type à paliers lisses.

3. Partie avant de turbomachine selon l'une quelconque des revendications précédentes, **caractérisée en ce que** ledit moyeu de soufflante est supporté par deux paliers de roulement (74a, 74b), et **en ce que** ladite première roue dentée (38) est agencée axialement entre lesdits deux paliers de roulement.

4. Partie avant de turbomachine selon l'une quelconque des revendications précédentes, **caractérisée en ce que** le réducteur (20) comporte un train d'engrenages, de préférence épicycloïdal ou planétaire.

5. Partie avant de turbomachine selon la revendication 4, **caractérisée en ce que** le train épicycloïdal comprend ;
- un planétaire (52) entraîné en rotation par un arbre basse pression (11) du corps basse pression, et de préférence solidaire en rotation de cet arbre basse pression ;
- une couronne extérieure (54) solidaire d'un stator de la turbomachine ;
- des satellites (56) engrenant avec la couronne extérieure (54) et le planétaire (52) ; et
- un porte-satellites (58) entraînant en rotation le moyeu (60) de la soufflante (15), et de préférence solidaire en rotation de ce moyeu.

6. Partie avant de turbomachine selon l'une quelconque des revendications précédentes, **caractérisée en ce que** ladite pluralité d'équipements comprend, entraînés par le boîtier d'engrenages (32), un ou plusieurs équipements parmi une pompe à carburant, une pompe hydraulique, une pompe de lubrification, un alternateur, un démarreur, ou encore un générateur électrique de puissance.

7. Turbomachine à double flux pour aéronef comprenant une partie avant (la) selon l'une quelconque des revendications précédentes.

8. Turbomachine selon la revendication précédente, **caractérisée en ce qu'**elle est un turboréacteur (1).

## Patentansprüche

1. Vorderteil (1a) eines Zweikreis-Flugzeugturbotriebwerks (1) mit einem Lüfter (15), der von einem Lüftergehäuse (9) sowie einem den Lüfter (15) antreibenden Reduzierstück (20) umgeben ist, wobei das Vorderteil des Turbotriebwerks außerdem ein Getriebegehäuse (32) sowie ein mechanisches Leistungsabnahmegehäuse (36) aufweist, das das Getriebegehäuse antreibt, wobei das Vorderteil des Turbotriebwerks ein erstes Zahnrad (38) sowie ein zweites Zahnrad (40) umfasst, welches Teil des mechanischen Leistungsabnahmegehäuses (36) ist und von dem ersten Zahnrad (38) angetrieben wird,
wobei das erste Zahnrad (38) mit einer Nabe (60) des Lüfters (15) drehverbunden ist,
das Vorderteil eine Mehrzahl von Ausrüstungsteilen aufweist, von welchen ein Ausrüstungsteil (33) die Versorgung des Reduzierstücks (20) mit Schmiermittel ermöglicht, wobei die Ausrüstungsteile von dem Getriebegehäuse (32) angetrieben werden,
und die Mehrzahl von Ausrüstungsteilen sowie das Getriebegehäuse (32) in einer Zwischenstrahlkammer (28) des Turbotriebwerks angeordnet sind.

2. Vorderteil des Turbotriebwerks nach einem der vorhergehenden Ansprüche, **dadurch gekennzeichnet, dass** das Reduzierstück (20) vom Gleitlagertyp ist.

3. Vorderteil des Turbotriebwerks nach einem der vorhergehenden Ansprüche, **dadurch gekennzeichnet, dass** die Nabe des Lüfters durch zwei Rollenlager (74a, 74b) gelagert ist, und dass das erste Zahnrad (38) axial zwischen den zwei Rollenlagern angeordnet ist.

4. Vorderteil des Turbotriebwerks nach einem der vorhergehenden Ansprüche, **dadurch gekennzeichnet, dass** das Reduzierstück (20) ein, vorzugsweise epizykloidisches oder planetenförmiges, Rädergetriebe aufweist.

5. Vorderteil des Turbotriebwerks nach Anspruch 4, **dadurch gekennzeichnet, dass** das epizykloidische Rädergetriebe Folgendes umfasst:
- einen Planeten (52), der von einer Niederdruckwelle (11) des Niederdruckkörpers in Drehung angetrieben wird und bevorzugt mit der Niederdruckwelle drehverbunden ist;
- einen mit einem Stator des Turbotriebwerks fest verbundenen Außenkranz (54);
- Satelliten (56), die in den Außenkranz (54) und den Planeten (52) eingreifen; sowie
- einen Satellitenträger (58), der die Nabe (60) des Lüfters (15) in Drehung antreibt und bevorzugt mit der Nabe drehverbunden ist.

6. Vorderteil des Turbotriebwerks nach einem der vorhergehenden Ansprüche, **dadurch gekennzeichnet, dass** die Mehrzahl von Ausrüstungsteilen, von dem Getriebegehäuse (32) angetrieben, ein oder mehrere Ausrüstungsteile aus einer Treibstoffpumpe, einer Hydraulikpumpe, einer Schmierpumpe, einem Wechselstromgenerator, einem Anlasser, oder auch einem Elektroleistungsgenerator umfasst.

7. Zweikreis-Flugzeugturbotriebwerk mit einem Vorderteil (1a) nach einem der vorhergehenden Ansprüche.

8. Turbotriebwerk nach dem vorhergehenden Anspruch, **dadurch gekennzeichnet, dass** es ein Turboluftstrahltriebwerk (1) ist.

## Claims

1. Front part (1a) of an aircraft bypass turbine engine (1) comprising a fan (15) surrounded by a fan casing (9) as well as a reduction gear (20) driving said fan (15), the front part of the turbine engine further comprising a gearbox (32) as well as a mechanical power takeoff box (36) driving the gearbox, the front part of the turbine engine comprising a first toothed wheel (38) as well as a second toothed wheel (40) forming part of the mechanical power takeoff box (36) and driven by said first toothed wheel (38),
**characterised in that** said first toothed wheel (38) is constrained to rotate with a hub (60) of the fan (15),
**in that** the front part comprises a plurality of items of equipment, including an item of equipment (33) for supplying the reduction gear (20) with lubricant, the items of equipment being driven by the gearbox (32),
and **in that** said plurality of items of equipment, as well as the gearbox (32), are arranged in an inter-duct compartment (28) of the turbine engine.

2. Turbine-engine front part according to any of the preceding claims, **characterised in that** the reduction gear (20) is of the plain bearing type.

3. Turbine-engine front part according to any of the preceding claims, **characterised in that** said fan hub is supported by two rolling bearings (74a, 74b) and **in that** said first toothed wheel (38) is arranged axially between said two rolling bearings.

4. Turbine-engine front part according to any of the preceding claims, **characterised in that** the reduction gear (20) comprises a gear train, preferably epicyclic or planetary.

5. Turbine-engine front part according to claim 4, **characterised in that** the epicyclic train comprises:
- a sun gear (52) rotated by a low-pressure shaft (11) of the low-pressure body, and preferably constrained to rotate with this low-pressure shaft;
- an external ring (54) secured to a stator of the turbine engine;
- planets (56) meshing with the external ring (54) and the sun gear (52); and
- a planet holder (58) rotating a hub (60) of the fan (15), preferably constrained to rotate with this hub.

6. Turbine-engine front part according to any of the preceding claims, **characterised in that** said plurality of items of equipment comprise, driven by the gearbox (32), one or more items of equipment including a fuel pump, a hydraulic pump, a lubrication pump, an alternator, a starter or an electric power generator.

7. Bypass turbine engine for an aircraft, comprising a front part (1a) according to any of the preceding claims.

8. Turbine engine according to the preceding claim, **characterised in that** it is a turbojet engine (1).
